(19) Europäisches Patentamt
European Patent Office
Office européen des brevets

(11) **EP 4 318 028 A1**

(12) **EUROPEAN PATENT APPLICATION**

(43) Date of publication:
**07.02.2024 Bulletin 2024/06**

(21) Application number: **23187931.3**

(22) Date of filing: **26.07.2023**

(51) International Patent Classification (IPC):
***G01S 7/481*** *(2006.01)*    ***G01S 17/08*** *(2006.01)*
***G01S 17/42*** *(2006.01)*    ***G01S 17/89*** *(2020.01)*
***G01S 17/10*** *(2020.01)*

(52) Cooperative Patent Classification (CPC):
**G01S 17/42; G01S 7/4815; G01S 7/4817;**
**G01S 17/08; G01S 17/10; G01S 17/89**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **31.07.2022 CN 202210913026**

(71) Applicant: **Suteng Innovation Technology Co., Ltd**
**Shenzhen City Guangdong 518000 (CN)**

(72) Inventor: **CHEN, Huazhou**
**Shenzhen City (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **LIDAR DEVICE**

(57) This application is applicable to the field of LiDAR detection, and provides a LiDAR device, where the LiDAR device includes a laser beam emission module and a beam adjustment module, and the laser beam emission module includes at least two emitters arranged at intervals; the emitter is configured to emit the laser beam, and the beam adjustment module is configured to adjust the laser beam, so that a diameter of a light spot formed by the laser beam within a first preset distance is greater than a first preset value; an angle interval between emission channels of two adjacent emitters that simultaneously emit laser beams is greater than a preset angle, and/or an emission time interval between laser beams emitted during two adjacent emissions is longer than preset duration, which can ensure safety of human eyes without reducing resolution.

FIG. 1

EP 4 318 028 A1

## Description

## TECHNICAL FIELD

This application pertains to the field of LiDAR detection, and in particular, relates to a LiDAR device.

## BACKGROUND

A LiDAR device can perform three-dimensional construction on a surrounding environment, and therefore, has a great application prospect in autonomous driving. A current development trend of the LiDAR is to increase a measurement distance and resolution, to improve sensing accuracy for the surrounding environment. However, the distance and resolution are improved generally at the expense of increased laser emission power. Current mainstream LiDAR devices include LiDAR devices on two bands of long wavelength (for example, 1550 nm) and middle-to-long wavelength (for example, 900 nm, 905 nm or 940 nm). Although the long-wavelength LiDAR device implements a very high safety threshold for human eyes, a current transceiver is too expensive to be widely applied. To continuously improve performance of low-cost LiDAR devices, emission frequency and power generally needs to be increased to improve ranging performance. Due to a limitation of a conventional architecture, excessively high emission frequency and power cause safety hazards to the human eyes.

## SUMMARY

In view of this, embodiments of this application provide a LiDAR device, which can resolve a safety problem of human eyes when the LiDAR device detects a target.

Embodiments of this application provide a LiDAR device, including: a laser beam emission module and a beam adjustment module, where the laser beam emission module includes at least two emitters arranged at intervals, the emitter is configured to emit a laser beam, and the beam adjustment module is configured to adjust the laser beam, so that a diameter of a light spot formed by the laser beam within a first preset distance is greater than a first preset value; and an angle interval between emission channels of two adjacent emitters that simultaneously emit laser beams is greater than a preset angle, and/or an emission time interval between laser beams emitted during two adjacent emissions is longer than preset duration.

Optionally, the beam adjustment module includes an emission lens assembly, and a focal length of the emission lens assembly is greater than a second preset value, so that the diameter of the light spot formed by the laser beam within the first preset distance is greater than the first preset value.

Optionally, the beam adjustment module includes a divergence angle enlarging assembly, and the beam adjustment module includes a light spot adjustment assembly configured to make the diameter of the light spot formed by the laser beam within the first preset distance greater than the first preset value.

Optionally, the beam adjustment module further includes a divergence angle narrowing assembly, and the divergence angle narrowing assembly is configured to narrow a divergence angle of the laser beam at a distance farther than a second preset distance.

Optionally, the at least two emitters are configured to emit laser beams at the same moment, and the at least two emitters are configured to continuously emit laser beams at a first time interval to scan detection space; during a $t^{th}$ scan, a horizontal angle interval between first spots formed by laser beams emitted during two adjacent emissions is a first preset angle, and during a $(t+1)^{th}$ scan, a horizontal angle interval between second spots formed by laser beams emitted during two adjacent emissions is the first preset angle, a horizontal angle interval between the adjacent first light spot and second light spot is a second preset angle, and the second preset angle is less than the first preset angle.

Optionally, an emission time interval between laser beams emitted during two adjacent emissions within a region of interest is first duration, an emission time interval between laser beams emitted during two adjacent emissions outside the region of interest is second duration, and the first duration is shorter than the second duration.

Optionally, the beam adjustment module includes a scanning apparatus configured to reflect the laser beam to change an emission direction of the laser beam, laser beams continuously emitted by a same emitter form a scanning surface within the first preset distance, the scanning apparatus is further configured to perform scan in a first scanning direction based on a preset step size, and the step size depends on a density requirement for a scanning line in the first scanning direction in the scanning surface.

Optionally, change time of the step size depends on a scanning angle of the scanning apparatus in a previous scanning period in a second scanning direction, a detection angle of view in the second scanning direction, and a scanning speed of the scanning apparatus in the second scanning direction; and an angle between the second scanning direction and the first scanning direction is less than or equal to 180 degrees.

Optionally, the preset angle is 3 times the divergence angle of the laser beam.

Optionally, the LiDAR device further includes a laser beam receiving apparatus, and a diameter range of a receiving aperture of the laser beam receiving apparatus is 20 mm to 25 mm.

Compared with the prior art, the embodiments of this application have the following beneficial effects: The LiDAR device includes the laser beam emission module and the beam adjustment module, where the laser beam emission module includes the at least two emitters arranged at intervals, the emitter is configured to emit the laser beam, and the beam adjustment module is configured to adjust the laser beam, so that the diameter of the light spot formed by the laser beam within the first preset distance is greater than the first preset value, to ensure that only some energy emitted by a laser enters the human eyes, thereby ensuring the safety of the human eyes without reducing resolution. In addition, the angle interval between the emission channels of the two adjacent emitters that simultaneously emit the laser beams is greater than the preset angle, so that light spots formed by the two simultaneously emitted laser beams do not overlap with each other on retinas of the human eyes to ensure the safety of the human eyes; and/or the emission time interval between laser beams emitted during two adjacent emissions is longer than preset duration, so that total energy of the laser beam entering the human eyes within specific duration is relatively small, thereby ensuring the safety of the human eyes.

## BRIEF DESCRIPTION OF THE DRAWINGS

In order to more clearly describe technical solutions in embodiments of this application, the following briefly describes drawings required for description of the embodiments or the prior art.

    FIG. 1 is a schematic diagram of LiDAR device according to an embodiment of this application;
    FIG. 2a is a schematic diagram of an arrangement of an emission group according to an embodiment of this application;
    FIG. 2b is a schematic diagram of another arrangement of an emission group according to an embodiment of this application;
    FIG. 3 is a schematic diagram of an arrangement of an emission group according to another embodiment of this application;
    FIG. 4 is a schematic diagram of an arrangement of two groups of emitters according to an embodiment of this application;
    FIG. 5 is a schematic diagram of an arrangement of two groups of emitters according to another embodiment of this application;
    FIG. 6 is a schematic diagram of an arrangement of light spots formed in two scans according to an embodiment of this application;
    FIG. 7 is a schematic diagram of different scanning line densities in different regions according to an embodiment of this application;
    FIG. 8a is a schematic cross-sectional view of an irregular six-sided lens according to an embodiment of this application;
    FIG. 8b is a schematic cross-sectional view of a regular four-sided lens according to an embodiment of this application; and
    FIG. 9 is a schematic diagram of a detection apparatus of LiDAR device according to an embodiment of this application.

## DESCRIPTION OF THE INVENTION

To more clearly describe the to-be-resolved technical problems, technical solutions, and beneficial effects in this application, the following further describes this application in detail with reference to the accompanying drawings and embodiments. It should be understood that the specific embodiments described herein are merely used to explain this application but are not intended to limit this application.

It should be noted that azimuth or position relationships indicated by terms such as "vertical", "horizontal", "inside", and "outside" are based on the azimuth or position relationships shown in the accompanying drawings, are merely relative concepts for each other or are described with reference to a normal use status of the product, and are intended to describe this application and simplify the descriptions, but are not intended to indicate or imply that the specified device or element shall have specific azimuth or be formed and operated in specific azimuth, and therefore cannot be understood as a limitation on this application.

In addition, the terms such as "first" and "second" are merely intended for a purpose of description, and shall not be understood as an indication or implication of relative importance or implicit indication of a quantity of indicated technical features. Therefore, a feature with a determiner such as "first" or "second" may expressly or implicitly include one or more features.

It should be understood that when used in this specification and appended claims, a term "include" indicates existence of a described feature, integrity, a step, an operation, an element and/or a component, but does not exclude existence or addition of one or more other features, integrity, steps, operations, elements, components and/or a collection thereof. Herein, "multiple" means two or more, unless otherwise specifically defined.

It should also be understood that the terms used in this specification of this application are only used to describe the specific embodiments and are not intended to limit this application. As used in this specification and the appended claims of this application, unless otherwise the context clearly indicates another case, singular forms of "a", "an" and "the" are intended to include plural forms.

For existing middle- to long-wavelength (900 nm, 905 nm or 940 nm) LiDAR devices, to improve a ranging distance and resolution, emission frequency and power generally needs to be increased to improve ranging performance. Due to a limitation of a conventional architecture, excessively high emission frequency and power cause safety hazards to human eyes.

Therefore, this application provides a LiDAR device, including: a laser beam emission module and a beam adjustment module, where the laser beam emission module includes at least two emitters arranged at intervals, the emitter is configured to emit a laser beam, and the beam adjustment module is configured to adjust the laser beam, so that a diameter of a light spot formed by the laser beam within a first preset distance is greater than a first preset value, to ensure that only some energy emitted by a laser enters the human eyes, thereby ensuring the safety of the human eyes without affecting resolution. In addition, the angle interval between the emission channels of two adjacent emitters that simultaneously emit laser beams is greater than a preset angle, so that light spots formed by the two simultaneously emitted laser beams do not overlap with each other on retinas of the human eyes to ensure the safety of the human eyes; and/or the emission time interval between laser beams emitted during two adjacent emissions is longer than preset duration, so that total energy of the laser beams entering the human eyes within specific duration is relatively small, thereby ensuring the safety of the human eyes.

The LiDAR device provided in this application is exemplarily described below.

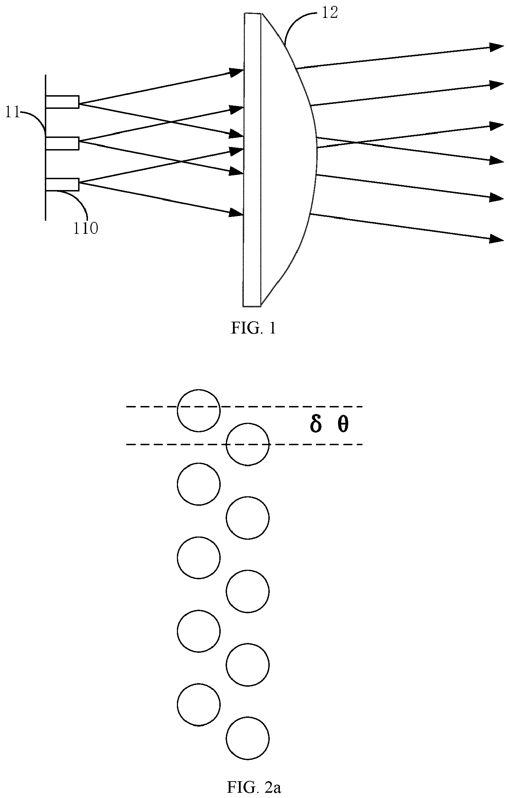

Referring to FIG. 1, the LiDAR device provided in this embodiment of this application includes a laser beam emission module 11 and a beam adjustment module 12, the laser beam emission module 11 includes at least two emitters 110 arranged at intervals, and the emitters 110 can be arranged on an emission board. The emitter 110 is configured to emit a laser beam, and the beam adjustment module 12 is configured to adjust the laser beam, so that the diameter of the light spot formed by the laser beam within the first preset distance is greater than the first preset value. The first preset distance refers to a near-field range of the emitter. Optionally, the first preset distance is a distance from the emitter 110 to a window. If a light spot formed in the near-field range is greater than the first preset value, a light spot in a far-field range should also be greater than the first preset value. Because resolution of the emitter in the far-field range depends on the divergence angle of the laser beam, an increase in the near-field light spot does not affect the resolution of the LiDAR device in the far-field range. The first preset value can be set to an approximate diameter of pupils of the human eyes in advance. For example, the first preset value can be 10 mm, so that the light spot is larger than the pupils of the human eyes and only a part of energy emitted by the laser enters the human eyes, thereby ensuring the safety of the human eyes.

It can be understood that the emitter in this application may be Vertical-Cavity Surface-Emitting Laser (VCSEL) or Edge Emitting Laser (EEL). The type of the emitter is not limited in this embodiment. It can be understood that, based on the determined type of emitter, for a middle-to long-wavelength (for example, 905 nm or 940 nm) emitter, a transceiver with a longer wavelength is preferred, which can effectively increase a safety threshold for the human eyes.

In an embodiment, the beam adjustment module 12 includes an emission lens assembly, a laser beam emitted by the emitter is directed out by the emission lens assembly, and a focal length of the emission lens assembly is greater than a second preset value, so that the diameter of the light spot formed by the laser beam within the first preset distance is greater than the first preset value, thereby ensuring safety of human eyes.

In an embodiment, the beam adjustment module 12 includes a light spot adjustment assembly, and a laser beam emitted by the emitter is directed out by the light spot adjustment assembly, so that the diameter of the light spot formed by the laser beam within the first preset distance is greater than the first preset value, thereby ensuring safety of human eyes.

In an embodiment, the beam adjustment module 12 also includes a divergence angle narrowing assembly, the laser beam directed by the light spot adjustment assembly is emitted through the divergence angle narrowing assembly, the divergence angle narrowing assembly is configured to narrow the divergence angle of the laser beam at a distance farther than the second preset distance, and the second preset distance refers to a far-field range of the laser beam (for example, the far-field range can be defined as a range exceeding ten meters, where a specific value of the far-field range is not limited in this application), thereby preventing an excessively large divergence angle of the laser beam in the far-field range from affecting the resolution. When the divergence angle of the laser beam at a distance farther than the second preset distance is narrowed, it is necessary to ensure that a diameter of a light spot formed at Gaussian beam waist of the laser beam is greater than the first preset value, thereby ensuring the safety of the human eyes.

It should be noted that the emission lens assembly, the light spot adjustment assembly, and the divergence angle narrowing assembly can all include one or more lens optical device, and parameters such as the number of lenses, the lens type, and a distance between adjacent lenses can be flexibly configured based on an actual need, which is not limited herein, provided that a corresponding focal length condition, a light spot adjustment effect, and a beam adjustment effect are satisfied.

After the laser beam enters the human eyes, crystalline lenses of the human eyes focus the light spot on the retinas, and the size of the light spot is related to the divergence angle of the laser beam. In addition, to satisfy a resolution requirement, a specific number of laser pulses need to be emitted within short time. For example, generally, approximately more than 10 pulses need to be emitted within 5 microseconds to meet the resolution requirement. Due to the size limitation of the LiDAR device, these pulses overlap with each other to some extent in space. If multiple emitters emit laser beams through the emission channels at the same time, some energy of a laser beam emitted through each emission channel enters the human eyes, thereby forming multiple light spots on the retinas of the human eyes. If multiple light spots overlap with each other, energy of the laser beam entering the human eyes is increased, which further affects the safety of the human eyes. Therefore, in an embodiment, at least two emitters emit laser beams simultaneously, and the angle interval between the emission channels of the two adjacent emitters that simultaneously emit the laser beams is greater than the preset angle, so that light spots formed by laser beams emitted through emission channels do not overlap with each other on retinas, thereby avoiding affecting the safety of the human eyes. The preset angle can be 2 to 3 times the divergence angle of the laser beam. For example, the preset angle is 3 times the divergence angle of the laser beam, so that light spots formed by laser beams emitted through the emission channels of the two adjacent emitters do not overlap with each other on the retinas.

In an embodiment, the emission time interval between laser beams emitted during two adjacent emissions is longer than preset duration, so that total energy of the laser beam entering the human eyes within specific duration is relatively small, thereby ensuring the safety of the human eyes.

In an embodiment, the laser beam emission module includes at least two emitters, and the at least two emitters emit laser beams at the same moment. That is, at least two emitters form an emission group. That is, the laser beam emission module includes an emission group. An emission time interval between laser beams emitted by one emission group during two adjacent emissions is greater than the preset duration.

In some embodiments, one emission group may include multiple emitters, and the multiple emitters may be sorted into one or more columns.

In an embodiment, one emitter group is sorted into two columns, and the two columns of emitters can be arranged alternately in a manner shown in FIG. 2a. The angle interval between the emission channels of the two adjacent emitters refers to an angle interval between emission channels of the nearest emitters along a direction perpendicular to an outgoing direction of the laser beam. The angle interval between the emission channels of the two adjacent emitters is greater than a preset angle. Therefore, the light spots on the retinas that are formed by the laser beams emitted through each emission channel do not overlap with each other. In addition, the two columns of emitters are sorted alternately, and therefore, a distance between two adjacent light spots in the light spots formed by the laser beams emitted by one emission group can be reduced. That is, a density of light spots formed by the laser beams emitted by one emission group is increased.

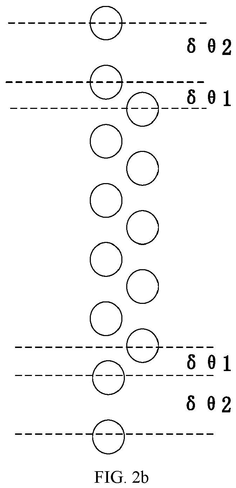

As shown in FIG. 2b, it can be understood that when the emitters in one emission group are sorted into two columns, the two columns of emitters can be partially staggered based on a requirement for the detection field of view. An angle interval between emission channels of two adjacent emitters in emitters in a central region is the first angle $\delta\theta 1$, an angle interval between the emission channels of the two adjacent emitters in emitters in an edge region is a second angle $\delta\theta 2$, the first angle $\delta\theta 1$ is less than the second angle $\delta\theta 2$, and angle intervals between emitters corresponding to different detection regions are set to be different, which can increase a density of light spots formed by the laser beams in the region of interest. It can be understood that, when angles between emission channels of the two adjacent emitters are unequal, the minimum angle between two adjacent emission channels should be greater than the preset angle. For example, as shown in FIG. 2b, the first angle $\delta\theta 1$ should be greater than the preset angle. A region of interest (ROI) refers to a region that needs greater attention in the preset region during laser scanning. It can be understood that the region of interest generally corresponds to a central region in the detection field of view (to be specific, an emission channel in the central region of the emission group). The detection field of view of the LiDAR device also includes a general detection region in addition to the region of interest, and the general detection region is another region in the detection field of view other than the region of interest. It can be understood that the general detection region generally corresponds to an edge region of the detection field of view (to be specific, an emission channel in the edge region of the emission group).

In an embodiment, one emission group is sorted into a column, and angle intervals between the emission channels of the emitters may be equal or unequal.

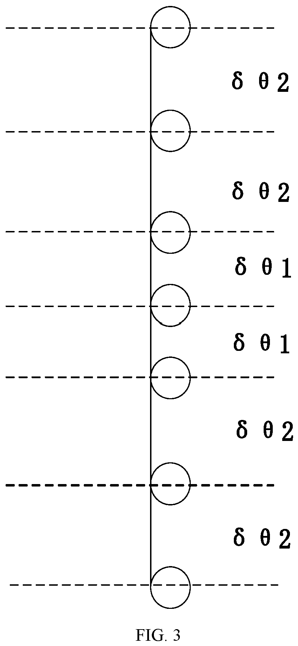

Optionally, as shown in FIG. 3, one emission group is sorted into one column, based on a detection requirement, an angle interval between emission channels of two adjacent emitters in emitters in a central region is the first angle $\delta\theta 1$, an angle interval between the emission channels of the two adjacent emitters in emitters in an edge region is a second angle $\delta\theta 2$, the first angle $\delta\theta 1$ is less than the second angle $\delta\theta 2$, and angle intervals between emitters corresponding to different detection regions are set to be different, which can increase a density of light spots formed by the laser beams in the region of interest. It can be understood that, when angles between emission channels of the two adjacent emitters are unequal, the minimum angle between two adjacent emission channels should be greater than the preset angle. For example, as shown in FIG. 3, the first angle $\delta\theta 1$ should be greater than the preset angle.

In another optional embodiment, at least two emitters can also be divided into at least two groups. In the same emission group, the angle interval between the emission channels of two adjacent emitters is greater than the preset angle, and the time interval between laser beams emitted by the two groups of emitters emitting the laser beams sequentially is longer than the preset duration, thereby avoiding the damage to human eyes during a target detection process of the LiDAR device.

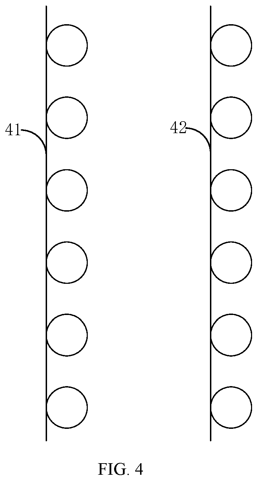

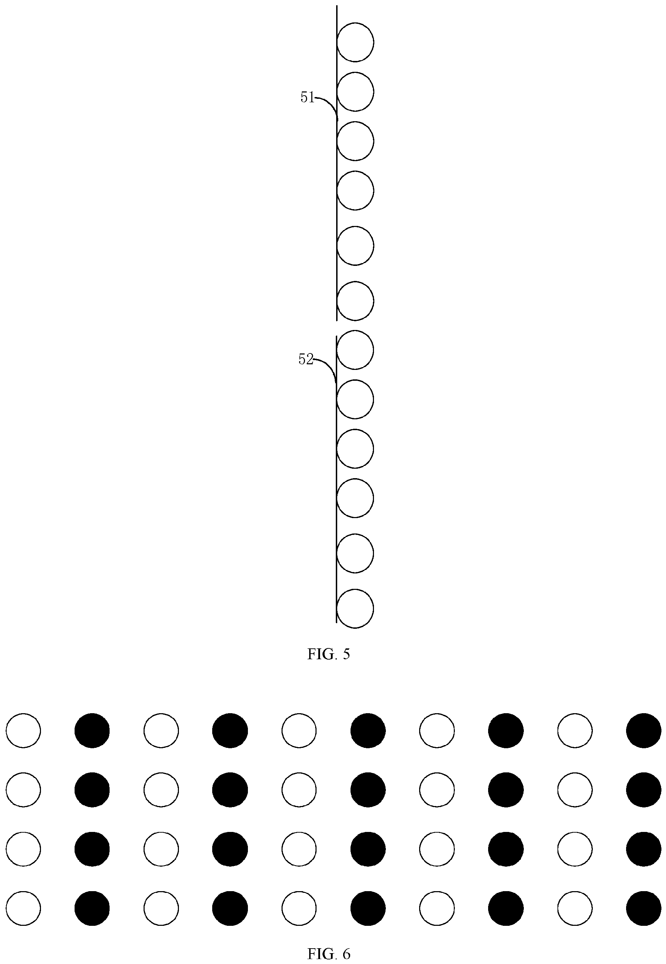

In an embodiment, the at least two emitters are divided into a first emitter group and a second emitter group, emitters in the first emitter group emit laser beams at the same moment, and emitters in the second emitter group emit laser beams at the same moment. As shown in FIG. 4, FIG. 4 shows an optional emission group. An arrangement direction of the first emission group 41 is parallel to an arrangement direction of the second emission group 42, the first emission group 41 and the second emission group 42 respectively emit laser beams at a set time interval to form a light spot array or a scanning line. As shown in FIG. 5, the first emitter group 51 and the second emitter group 52 also can be in the same column, and when the first emitter group 51 and the second emitter group 52 are in the same column, a location and an arrangement of each emitter can be determined based on an actual need. The first emitter group 51 and the second emitter group 52 emit laser beams at a set time interval and a set angle, and can also form a light spot array or a scanning line, thereby increasing resolution in the target detection process.

In another embodiment, at least two emitters can also be divided into multiple groups, and multiple groups of emitters can be arranged in parallel or in the same column. Each group of emitters emits light sequentially at the set time interval to form a light spot or a scanning line in the detection field of view.

In an embodiment, the at least two emitters emit laser beams at the same moment, that is, the laser bean emission module includes an emission group, and an emission group continuously emits laser beams at a first time interval to form a scanning line, to scan detection space; and during a $t^{th}$ (t represents an integer greater than 0) scan, a horizontal angle interval between first light spots formed by laser beams emitted during two adjacent emissions is a first preset angle, and during a $(t+1)^{th}$ scan, a horizontal angle interval between second light spots formed by laser beams emitted during two adjacent emissions is a first preset angle, a horizontal angle interval between the adjacent first light spot and second light spot is a second preset angle, and the second preset angle is less than the first preset angle, thereby improving horizontal resolution in a target detection process. Exemplarily, the first preset angle is twice the second preset angle, so that an evenly distributed light spot can be formed.

For example, as shown in FIG. 6, the number of emitters is set to 4. In a first scanning process, horizontal angles of light spots formed by the laser beams at scanning moments are $0$, $\delta\theta_{\backslash\backslash}$, and $2\delta\theta_{\backslash\backslash}$ ... in sequence. That is, light spots in first, third, fifth, seventh, and ninth columns in FIG. 6 are obtained. Herein, $\delta\theta_{\backslash\backslash}$ is greater than 0. In a second scanning process, horizontal angles of light spots formed by the laser beams at scanning moments are $\dfrac{\delta\theta_{\backslash\backslash}}{2}$, $3\dfrac{\delta\theta_{\backslash\backslash}}{2}$, and $5\dfrac{\delta\theta_{\backslash\backslash}}{2}$ ... in sequence. That is, light spots in second, fourth, sixth, eighth, and tenth columns in FIG. 6 are obtained. A light spot arrangement corresponding to the two scans is the light spot arrangement with a horizontal angle of $\dfrac{\delta\theta_{\backslash\backslash}}{2}$. That is, a light spot combination corresponding to the two scans is a light spot combination with horizontal resolution of $\dfrac{\delta\theta_{\backslash\backslash}}{2}$. In other words, the two scans can ensure that the horizontal resolution reaches $\dfrac{\delta\theta_{\backslash\backslash}}{2}$, and therefore, when the time interval between laser beams emitted by the two emitters emitting laser beams in sequence is greater than the preset duration, and the angle interval between the emission channels of the two adjacent emitters is greater than the preset angle value, the horizontal and vertical resolution in the target detection process can still be improved by controlling the step size and the step time of the scanning apparatus. Parameters of the laser beam emission module and/or the beam adjustment module can be adjusted to change a vertical and/or horizontal angle of the light spot formed by the laser beam emitted each time (for example, positions and the number of emitters in the same emission can be controlled, to adjust a change in a vertical and/or horizontal angle of the light spot formed by the laser beam in the same emission); or the scanning apparatus can also be controlled to change the vertical and/or horizontal angle of the light spot formed by the laser beam emitted each time, thereby obtaining the foregoing light spot combination.

In another embodiment, the horizontal angle of the light spot corresponding to two adjacent scans may be further reduced, or the number of scans may be increased, to further improve the horizontal resolution.

In an embodiment, light spots formed by the laser beams continuously emitted by one emitter are combined into a scanning line. During the process of emitting laser beams by one or more groups of emitters, adjusting the position of the emitter or the parameter of the beam adjustment module can change the position of the scanning line correspondingly. To ensure the safety of the human eyes, an angle interval between emission channels of two adjacent emitters needs to be greater than a preset angle, or an emission time interval between laser beams emitted during two adjacent emissions is longer than preset duration, which causes a large interval between two adjacent scanning lines in formed scanning lines, thereby affecting resolution. Therefore, it can be determined whether a currently scanned region is the region of interest during a moving process of the scanning line. If the currently scanned region is the region of interest, the time interval for the emitter to continuously emit laser beams is reduced, or a moving speed of the scanning line is reduced. If the currently scanned region is a region other than the region of interest (that is, a region of no interest), the time interval for the emitter to continuously emit laser beams is increased, or a moving speed of the scanning line is increased, so that the resolution can be improved during scanning of the region of interest. Whether the currently scanned region is the region of interest can be determined based on an application scenario of the LiDAR device, a size of the currently detected object, or a need of a user.

Optionally, an emission time interval between the laser beams emitted during two adjacent emissions within a region of interest is first duration, an emission time interval between the laser beams emitted during two adjacent emissions outside the region of interest is second duration, and the first duration is shorter than the second duration.

In the moving process of the scanning lines, a density of scanning lines formed by laser beams in the region of interest can be greater than a density of scanning lines formed in the region of no interest, which can satisfy a requirement for high resolution while ensuring the safety of the human eyes.

In an embodiment, the beam adjustment module further includes a scanning apparatus, and an emission direction of the laser beam is changed after reflection via the scanning apparatus. During the rotation of the scanning apparatus, laser beams emitted continuously by the same emitter or one emission group formed by multiple emitters form a scanning surface within the first preset distance.

The scanning directions of the scanning module include the first scanning direction (for example, the vertical scanning direction) and the second scanning direction (for example, the horizontal scanning direction). It can be understood that a scanning period is to complete both scanning of the entire horizontal detection field of view and vertical detection field of view. It can be understood that scanning in the two scanning directions is independently controlled, and scanning apparatuses include a scanning apparatus in the first scanning direction and a scanning apparatus in the second scanning direction. When the scanning apparatus in the first scanning direction is used as an apparatus for implementing the step size, the scanning period for completing one scan can be controlled by controlling the scanning time of the scanning apparatus in the second scanning direction, and the scanning period for one scan is also equal to the emission time interval between laser beams emitted during two adjacent emissions, and is also equal to the time for the scanning apparatus in the first scanning direction to complete one step.

The scanning in the two scanning directions is independently controlled; and an angle between the second scanning direction and the first scanning direction is less than or equal to 180 degrees. Optionally, as an optional embodiment, the second scanning direction is perpendicular to the first scanning direction. For example, the first scanning direction is used for vertical scanning (also referred to as column scanning) relative to a vertical direction of a target object, the second scanning direction is used for horizontal scanning (also referred to as row scanning) relative to a horizontal direction of the target object in the preset region, and in this case, the preset angle formed by the first scanning direction and the second scanning direction is 90°. The preset angle formed by two scanning directions may be set based on a need of the LiDAR device. For example, the preset angle can also be 30°, 60°, 120° and 150°.

The scanning apparatus in the first scanning direction may be, for example, a rotating mirror, a one-dimensional galvanometer, or any scanning apparatus in a rotating platform. A scanning apparatus in the second scanning direction can also be, for example, a rotating mirror, a one-dimensional galvanometer, or any scanning apparatus in a rotating platform. A type of scanning apparatus in any scanning direction in the two scanning directions is not limited in this application. It can be understood that types of the scanning apparatus in the first scanning direction and the scanning apparatus in the second scanning direction may be the same or different. This is not limited in this application. As a preferred embodiment, the scanning apparatuses in the two scanning directions can be individually controlled.

It can be understood that the scanning apparatus scans by a preset step size in the first scanning direction, and the step size depends on a density requirement for the scanning lines on the scanning surface in the first scanning direction, so that the step size of the scanning apparatus can be controlled in different detection regions or based on different detection requirements, and then different scanning line densities are formed in the detection regions, thereby satisfying a corresponding resolution requirement. If the laser beam emission module includes one emission group, and the emission group is sorted into a column, the first scanning direction is consistent with an arrangement direction of the emitters.

Specifically, the step size can be determined based on a formula $\delta\beta = \frac{\mathrm{N}}{n}\delta\theta$. Herein, $\delta\beta$ represents the step size; and $\delta\theta$ represents an angle interval between the scanning lines in the first scanning direction, that is, an angle interval between two adjacent scanning lines in one scanning group, where the scanning group is N scanning lines formed by detection laser beams emitted by the laser beam emission module once, where N is an integer. When the emission module includes one emission group, $\delta\theta$ is an angle interval between emission channels of two adjacent emitters in the emission group. It can be understood that when angle intervals between emission channels of two adjacent emitters in the emission group are unequal, the minimum angle interval is used to calculate the step size. N represents the number of scanning lines of one scanning group. When the laser beam emission module includes one emission group, the number of scanning lines is equal to the number of emitters included in the emission group, and N is an integer; and n represents a densification multiple of scanning lines in the detection region, where n is an integer and n is greater than or equal to 0.

It can be understood that when the densification multiple n is a prime number indivisible by the number N of emitters in the same emission group, the interval between the scanning lines of two emissions can be used for densification of scanning lines in the vertical direction.

It can be understood that when the densification multiple n is an integer divisible by the number N of emitters in the same emission group, the interval between the scanning lines of two emissions can be used for densification of scanning lines in the horizontal direction.

In an embodiment, change time of the step size depends on a scanning angle of the scanning apparatus in a previous scanning period in a second scanning direction, a detection angle of view in the second scanning direction, and a scanning speed of the scanning apparatus in the second scanning direction.

Specifically, when step sizes of the scanning apparatuses in the first scanning direction are the same, different change time of the step sizes corresponds to different scanning speeds, and an assembly interval is an angle interval between scanning groups performing two adjacent emissions. The scanning group is N scanning lines formed by the detection laser beams emitted by the emission module once, where N is an integer. In addition, the angle interval between scanning groups performing two adjacent emissions in the laser beam emission module is also referred to as an inter-group interval, where the assembly interval can be defined by an angle interval between consistent scanning lines of two scanning groups. For example, the assembly interval can be defined by an angle interval between first scanning lines of the two scanning groups.

It can be understood that controlling the step size and step time of the scanning apparatus can control a point cloud density of the point cloud (that is, a light spot) in the first scanning direction and/or the second scanning direction, thereby satisfying a detection requirement for the LiDAR device.

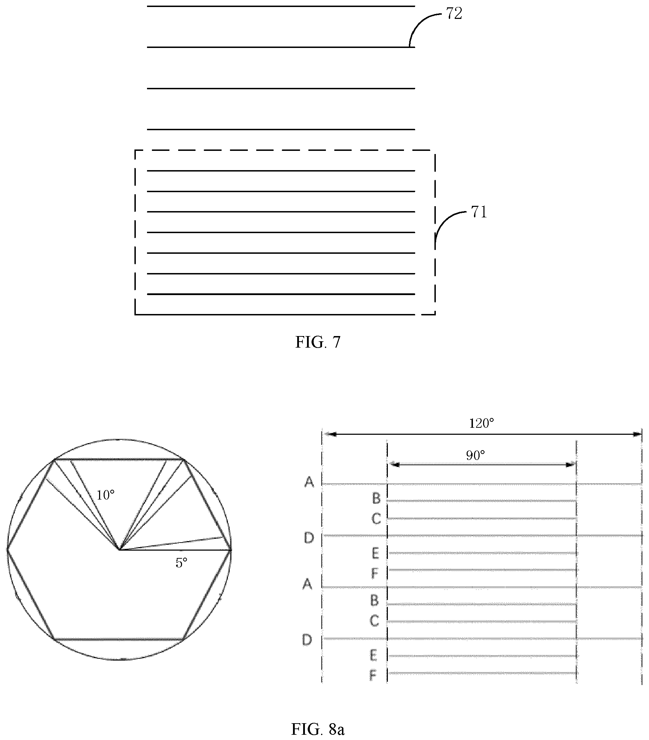

In an embodiment, based on a formula $\delta\beta = \dfrac{\alpha_{period} - \alpha_{FOV}}{\omega_2}\omega_1$, when a step size is $\delta\beta$, in the first scanning direction is known, a step speed depends on a scanning angle in a previous scanning period in a second scanning direction, a detection angle of view in the second scanning direction, and a scanning speed of the scanning apparatus in the second scanning direction. Herein, $\delta\beta$ represents the step size; $\alpha_{period}$ represents a scanning angle in a scanning period in the second scanning direction; $\alpha_{FOV}$ represents a detection angle of view in the second scanning direction, and $\alpha_{period} > \alpha_{FOV}$; $\omega_1$ represents a first scanning speed in the first scanning direction; and $\omega_2$ represents a second scanning speed in the second scanning direction. In conclusion, as shown in FIG. 7, different step sizes and step time are set for different detection regions, and therefore, an interval between two adjacent scanning lines can be smaller when the emitter scans the region of interest 71, and an interval between two adjacent scanning lines is larger when the emitter scans the region of no interest 72. Therefore, not only the safety of the human eyes is ensured, but also detection resolution is further improved in the region of interest. Similarly, different change time of the step sizes is set at different moments, and the step speeds of the first scanning apparatus in different regions can be controlled to ensure scanning stability of the scanning apparatus.

It can be understood that controlling the step size and step time of the scanning apparatus can control point cloud densities of the point clouds in the first scanning direction and/or the second scanning direction, and different inter-group intervals between scanning lines can be realized in different regions, so that resolution below 0.1 degrees can be achieved in the region of interest.

In another embodiment, the corresponding interval between scanning lines can also be obtained by controlling the rotation speed of the first scanning apparatus, and the corresponding inter-group interval can also be realized by controlling the rotation speed of the second scanning apparatus.

For example, the first scanning apparatus is a galvanometer, and the second scanning apparatus is a rotating mirror. The galvanometer rotates at a first preset speed during first preset duration, so that the laser beams form multiple first scanning lines in the region of interest, and the interval between two adjacent first scanning lines is a third preset value; the galvanometer rotates at a second preset speed during the second preset duration, so that the laser beams form multiple second scanning lines in a region other than the region of interest, and the interval between two adjacent second scanning lines is a fourth preset value; and the first preset speed is less than the second preset speed, and the third preset value is less than the fourth preset value. That is, in the second preset direction, a density of scanning lines in the region of interest is greater than a density of scanning lines in the region of no interest, which can satisfy a requirement for high resolution in a direction perpendicular to the scanning line while ensuring the safety of the human eyes.

The rotating mirror rotates at a third preset speed during the first preset duration, so that an assembly interval between two adjacent groups of scanning lines is a fifth preset value; the rotating mirror rotates at a fourth preset speed during the second preset duration, so that the assembly interval between two adjacent groups of scanning lines is a sixth preset value; and the third preset speed is less than the fourth preset speed, and the fifth preset value is less than the sixth preset value. That is, a density of scanning lines in the region of interest is greater than a density of scanning lines in the region of no interest, which can satisfy a requirement for high resolution in a direction parallel to the scanning line while ensuring the safety of the human eyes.

It should be noted that, to improve the resolution, when the emitter scans a set region, the galvanometer can be controlled to stop rotating, so that the laser beam emitted by the emitter can scan the same position repeatedly, thereby further improving the resolution in the first scanning direction. When the emitter scans a set region, the rotating mirror can also be controlled to stop rotating, so that the laser beam emitted by the emitter can scan the same position repeatedly, thereby further improving the resolution in the second scanning direction.

It can be understood that if the detection field of view includes multiple detection regions, and densification multiples n of scanning lines between different detection regions differ greatly, the step sizes of the scanning module vary greatly when the scanning module leaves a region for another region. If the step time remains unchanged, the step speed changes greatly, which is not conducive to stability of scanning operation of the scanning apparatus in the first scanning direction. Therefore, if the detection field of view of the LiDAR device includes multiple detection regions, and the scanning densities in the two detection regions vary greatly when the scanning apparatus leaves a detection region for another detection region for scanning, the detection angle of view of the scanning apparatus in the second scanning direction can be set to increase the change time of the step size. Optionally, change time of the step size can be increased by adding the redundant angle of the scanning apparatus in the second direction. For example, if the scanning apparatus in the second scanning direction is a polygonal rotating mirror, change time of the inter-group interval can be increased by adding a void scanning surface of the polygonal rotating mirror, so that a scanning speed of the scanning apparatus changes uniformly to the maximum extent, to reduce motion vibration of the scanning apparatus in the first scanning direction that is caused by the speed change, and maintain stability of scanning movement of the scanning apparatus in the first scanning direction. A formula for calculating the inter-group interval also is:

$$\delta\beta = \frac{\alpha_{period} - \alpha_{FOV} + k\alpha}{\omega_2}\omega_1$$

where $\delta\beta$ is the step size;

$\alpha_{period}$ is a scanning angle of the scanning group in one scanning period in the second scanning direction;

$\alpha_{FOV}$ is a detection angle of view in the second scanning direction;

$\alpha$ is an angle of view corresponding to each surface of a polygonal rotating mirror;

k is the number of surfaces of the polygonal rotating mirror;

$\omega_1$ is a first scanning speed in the first scanning direction; and

$\omega_2$ is a second scanning speed in the second scanning direction.

It can be understood that, in another scanning mode of the LiDAR device, the scanning apparatus can also perform scanning in the following manner.

The polygonal rotating mirror can be a regularly-shaped rotating mirror or an irregularly-shaped rotating mirror. The regularly-shaped rotating mirror is a rotating mirror whose central angles corresponding to all surfaces are equal. The irregularly-shaped rotating mirror is a rotating mirror that has at least one surface whose corresponding central angle is unequal to another central angle corresponding to another surface.

It can be understood that setting the void scanning surface and magnitude of the central angle corresponding to the scanning surface of the scanning apparatus in the second scanning direction can uniformize a change in the scanning speed of the scanning apparatus in the first scanning direction to the maximum extent, thereby ensuring movement stability of the scanning apparatus in the first scanning direction.

As shown in FIG. 8a, FIG. 8a is a schematic diagram of a cross section of an irregularly-shaped six-sided mirror. A surface A and a surface D are the first scanning surfaces, and have the same divergence angle corresponding to the center of the rotating mirror, and a surface B, a surface C, a surface D, and a surface E are the second scanning surfaces, and have the same divergence angle corresponding to the center of the rotating mirror. In consideration of width of the beam, a redundant angle of 10 degrees is set, with 5 degrees for left and right sides.

The surface A corresponds to the largest detection field of view, that is, the total detection field of view, and the angle of view is 120 degrees. Therefore, it can be determined that the divergence angle of the surface A corresponding to the center of the rotating mirror is 120/2+10=70 degrees. Herein, 60 degrees are used for scanning. Similarly, the divergence angle of the surface D corresponding to the center of the rotating mirror is 70 degrees. The surface F corresponds to the detection angle of view of one preset sub-region. It can be seen that the angle of view corresponding to the surface F is 90 degrees, and a divergence angle of the surface F corresponding to the center of the rotating mirror is 55 degrees. Similarly, the divergence angles of the surfaces B, C, E, and F corresponding to the center of the rotating mirror are all 55 degrees. It can be understood that irregularly-shaped rotating mirrors herein are arranged symmetrically along a central axis to ensure stability of scanning rotation.

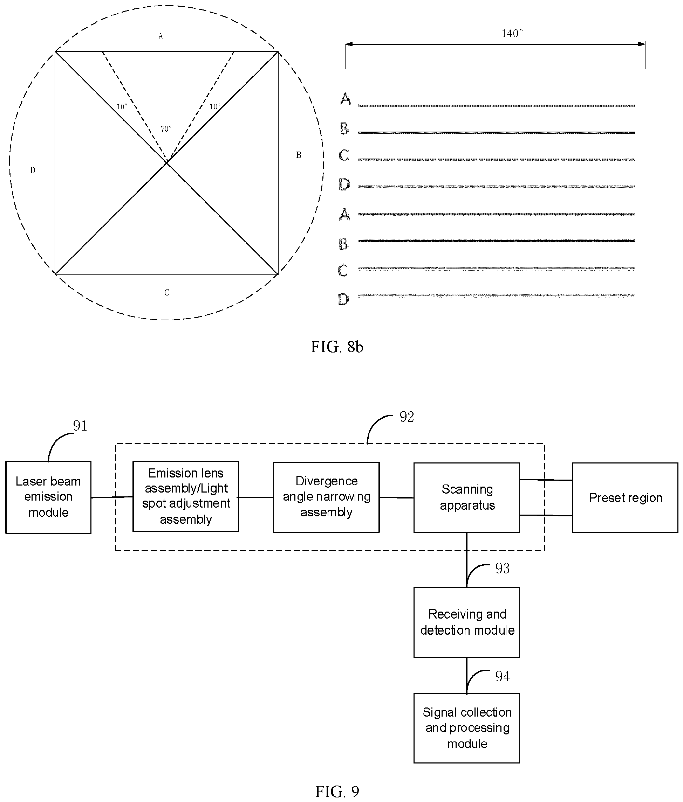

As shown in FIG. 8b, FIG. 8b is a schematic diagram of a cross section of a regularly-shaped four-sided mirror. A surface A, a surface B, a surface C, and a surface D have the same divergence angle of 90 degrees corresponding to the center of the rotating mirror. In consideration of a width of a light beam, a redundant angle of 20 degrees is set, with 10 degrees for either of left and right sides, and therefore, a total detection angle of view is 140 degrees.

The redundant angle corresponding to the scanning surface is related to a size of the light spot and a proportion of the light spot to the entire scanning surface. It can be understood that the larger the light spot, the larger the set redundant angle; and the larger the proportion of the light spot to the entire scanning surface, the larger the redundant angle that needs to be set. It can be understood that interference from stray light in a cavity of the scanning apparatus can be better reduced by setting a proper redundant angle.

In an embodiment, the LiDAR device further includes a laser beam receiving apparatus, and a diameter range of a receiving aperture of the laser beam receiving apparatus is 20 mm to 25 mm. On the middle- to long-wavelength band (for example, 940 nm), when a safety threshold of the human eyes reaches 60 to 100 watts, if the diameter range satisfies the foregoing requirement, the LiDAR device can perform ranging within a range of 250 to 300 meters.

As shown in FIG. 9, an embodiment of this application further provides LiDAR device, including: a laser beam emission module 91, configured to emit a laser beam; and a beam adjustment module 92, configured to adjust the laser beam, so that the diameter of the light spot formed by the laser beam within the first preset distance is greater than the first preset value, where in addition, the laser beam emission module 91 needs to satisfy that an angle interval between emission channels of two adjacent emitters that simultaneously emit laser beams is greater than a preset angle, and/or an emission time interval between laser beams emitted during two adjacent emissions is longer than preset duration.

The beam adjustment module 92 includes an emission lens assembly, and a focal length of the emission lens assembly is greater than a second preset value, so that the diameter of the light spot formed by the laser beam within the first preset distance is greater than the first preset value.

The beam adjustment module 92 further includes a light spot adjustment assembly, and the light spot adjustment assembly is configured to increase a divergence angle of the laser beam, so that the diameter of the light spot formed by the laser beam within the first preset distance is greater than the first preset value.

The beam adjustment module 92 includes a divergence angle narrowing assembly, and the divergence angle narrowing assembly is configured to narrow a divergence angle of the laser beam at a distance farther than a second preset distance.

The beam adjustment module 92 further includes a scanning apparatus, configured to receive the detection laser beam, emit the detection laser beam to a preset region, and scan the preset region in a preset scanning mode corresponding to the preset region, and further configured to receive an echo laser beam reflected from the preset region and output the echo laser beam. A scanning step size and a scanning speed of the scanning apparatus are set, so that the detection resolution of the LiDAR device is further improved while the LiDAR device satisfies a safety requirement of the human eyes, thereby satisfying a detection requirement for the LiDAR device.

The LiDAR device further includes a receiving and detection module 93, configured to receive the echo laser beam and convert the echo laser beam into an electrical signal.

The LiDAR device further includes a signal collection and processing module 94, configured to collect the electrical signal, and process the electrical signal to obtain detection information of the preset region.

It should be noted that another component further included in the LiDAR device and a name of each component in the LiDAR device are not limited in this embodiment of this application. It should be noted that the application scenario of the LiDAR device is not limited in this embodiment of this application. For example, the LiDAR device may be applied to fields such as smart transportation, autonomous driving, assisted driving, navigation, surveying and mapping, meteorology, aviation, or robotics, to implement space scanning, obstacle avoidance, route planning, weather forecasting, and the like.

In the foregoing embodiments, a size of the light spot of the laser beam in the near-field region is adjusted, and the angle between the emission channels or the time interval for emitting the laser beam are set, so that the detection resolution of the LiDAR device can be satisfied while safety of the human eyes can be ensured.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A LiDAR device, comprising: a laser beam emission module and a beam adjustment module, wherein the laser beam emission module comprises at least two emitters arranged at intervals, the emitter is configured to emit a laser beam, and the beam adjustment module is configured to adjust the laser beam, so that a diameter of a light spot formed by the laser beam within a first preset distance is greater than a first preset value; and
an angle interval between emission channels of two adjacent emitters that simultaneously emit laser beams is greater than a preset angle, and/or an emission time interval between laser beams emitted during two adjacent emissions is longer than preset duration.

2. The LiDAR device according to claim 1, wherein the beam adjustment module comprises an emission lens assembly, and a focal length of the emission lens assembly is greater than a second preset value, so that the diameter of the light spot formed by the laser beam within the first preset distance is greater than the first preset value.

3. The LiDAR device according to claim 1, wherein the beam adjustment module comprises a light spot adjustment assembly configured to make the diameter of the light spot formed by the laser beam within the first preset distance greater than the first preset value.

4. The LiDAR device according to claim 3, wherein the beam adjustment module further comprises a divergence angle narrowing assembly, and the divergence angle narrowing assembly is configured to narrow a divergence angle of the laser beam at a distance farther than a second preset distance.

5. The LiDAR device according to claim 1, wherein the at least two emitters are configured to emit laser beams at the same moment, and the at least two emitters are configured to continuously emit laser beams at a first time interval to scan detection space; and during a $t^{th}$ scan, a horizontal angle interval between first light spots formed by laser beams emitted during two adjacent emissions is a first preset angle, and during a $(t+1)^{th}$ scan, a horizontal angle interval between second light spots formed by laser beams emitted during two adjacent emissions is the first preset angle, a horizontal angle interval between the adjacent first light spot and second light spot is a second preset angle, and the second preset angle is less than the first preset angle.

6. The LiDAR device according to claim 1, wherein an emission time interval between laser beams emitted during two adjacent emissions within a region of interest is first duration, an emission time interval between laser beams emitted during two adjacent emissions outside the region of interest is second duration, and the first duration is shorter than the second duration.

7. The LiDAR device according to claim 1, wherein the beam adjustment module comprises a scanning apparatus configured to reflect the laser beam to change an emission direction of the laser beam, laser beams continuously emitted by a same emitter form a scanning surface within the first preset distance, and the scanning apparatus is further configured to perform scan in a first scanning direction based on a preset step size, the step size depending on a density requirement for a scanning line in the first scanning direction in the scanning surface.

8. The LiDAR device according to claim 7, wherein change time of the step size depends on a scanning angle of the scanning apparatus in a previous scanning period in a second scanning direction, a detection angle of view in the second scanning direction, and a scanning speed of the scanning apparatus in the second scanning direction; and an angle between the second scanning direction and the first scanning direction is less than or equal to 180 degrees.

9. The LiDAR device according to claim 1, wherein the preset angle is 3 times a divergence angle of the laser beam.

10. The LiDAR device according to claim 1, wherein the LiDAR device further comprises a laser beam receiving apparatus, a diameter range of the laser beam receiving apparatus being 20 mm to 25 mm.

FIG. 1

FIG. 2a

δ θ 2

δ θ 1

δ θ 1

δ θ 2

FIG. 2b

$\delta \theta 2$

$\delta \theta 2$

$\delta \theta 1$

$\delta \theta 1$

$\delta \theta 2$

$\delta \theta 2$

FIG. 3

41

42

FIG. 4

FIG. 5

FIG. 6

FIG. 7

FIG. 8a

FIG. 8b

FIG. 9

Europäisches
Patentamt

European
Patent Office

Office européen
des brevets

# EUROPEAN SEARCH REPORT

Application Number

EP 23 18 7931

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/231779 A1 (DONOVAN MARK J [US]) 29 July 2021 (2021-07-29) | 1-4,6-10 | INV. G01S7/481 |
| Y | * figures 1, 2 * * paragraphs [0022], [0035] - [0038] * | 5 | G01S17/08 G01S17/42 G01S17/89 |
| X | DE 10 2018 219475 A1 (BOSCH GMBH ROBERT [DE]) 20 May 2020 (2020-05-20) | 1-4,6-10 | G01S17/10 |
| Y | * figures 1b, 2 * * paragraphs [0008], [0016] - [0019], [0042], [0051] - [0056] * | 5 | |
| Y | DE 10 2017 127582 A1 (INFINEON TECHNOLOGIES AG [DE]) 25 April 2019 (2019-04-25) | 5 | |
| A | * figures 1, 6 * * paragraphs [0068] - [0070] * | 1-4,6-10 | |
| A | US 2019/107606 A1 (RUSSELL AUSTIN K [US] ET AL) 11 April 2019 (2019-04-11) * figures 8-13 * * paragraphs [0087] - [0093], [0099] - [0101] * | 1-10 | |

|  |  |
|---|---|
|  | TECHNICAL FIELDS SEARCHED (IPC) |
|  | G01S |

The present search report has been drawn up for all claims

| Place of search | Date of completion of the search | Examiner |
|---|---|---|
| Munich | 1 December 2023 | Rodríguez González |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 18 7931

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2023

| Patent document cited in search report | | Publication date | Patent family member(s) | Publication date |
|---|---|---|---|---|
| US 2021231779 | A1 | 29-07-2021 | CN 110402398 A | 01-11-2019 |
| | | | EP 3596492 A1 | 22-01-2020 |
| | | | JP 7037830 B2 | 17-03-2022 |
| | | | JP 7321553 B2 | 07-08-2023 |
| | | | JP 7360196 B2 | 12-10-2023 |
| | | | JP 2020510208 A | 02-04-2020 |
| | | | JP 2021073473 A | 13-05-2021 |
| | | | JP 2021139918 A | 16-09-2021 |
| | | | JP 2023040140 A | 22-03-2023 |
| | | | JP 2023123872 A | 05-09-2023 |
| | | | KR 20190120403 A | 23-10-2019 |
| | | | KR 20210065207 A | 03-06-2021 |
| | | | KR 20230061568 A | 08-05-2023 |
| | | | US 2018259623 A1 | 13-09-2018 |
| | | | US 2021231779 A1 | 29-07-2021 |
| | | | US 2023213625 A1 | 06-07-2023 |
| | | | WO 2018169758 A1 | 20-09-2018 |
| DE 102018219475 A1 | | 20-05-2020 | NONE | |
| DE 102017127582 A1 | | 25-04-2019 | DE 102017127582 A1 | 25-04-2019 |
| | | | JP 6714665 B2 | 24-06-2020 |
| | | | JP 2019066474 A | 25-04-2019 |
| US 2019107606 | A1 | 11-04-2019 | US 2019107606 A1 | 11-04-2019 |
| | | | US 2022390572 A1 | 08-12-2022 |

EPO FORM P0459

For more details about this annex : see Official Journal of the European Patent Office, No. 12/82